(19) Europäisches Patentamt
European Patent Office
Office européen des brevets

(11) **EP 2 667 681 A1**

(12) **EUROPEAN PATENT APPLICATION**
published in accordance with Art. 153(4) EPC

(43) Date of publication:
**27.11.2013 Bulletin 2013/48**

(51) Int Cl.:
*H04W 88/02* (2009.01)    *H04W 88/08* (2009.01)
*H04B 7/02* (2006.01)

(21) Application number: **11856226.3**

(22) Date of filing: **21.01.2011**

(86) International application number:
**PCT/CN2011/070498**

(87) International publication number:
**WO 2012/097526 (26.07.2012 Gazette 2012/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Fujitsu Limited
Kawasaki-shi, Kanagawa 211-8588 (JP)**

(72) Inventors:
• **LI, Hongchao
Beijing 100025 (CN)**
• **ZHANG, Yuantao
Beijing 100025 (CN)**
• **ZHANG, Yi
Beijing 100025 (CN)**
• **ZHOU, Hua
Beijing 100025 (CN)**
• **WU, Jianming
Beijing 100025 (CN)**

(74) Representative: **Ward, James Norman et al
Haseltine Lake LLP
Lincoln House, 5th Floor
300 High Holborn
London WC1V 7JH (GB)**

(54) **METHOD FOR REPORTING CHANNEL STATE INFORMATION, BASE STATION AND USER DEVICE**

(57)    A method for reporting channel state information, base station and user equipment. The method comprises: configuring a set of multiple measurement subsets by a base station; correspondingly storing the configured set of multiple measurement subsets and corresponding indication information, so as to establish mapping relation between the indication information and the set of measurement subsets; and notifying the mapping relation to UE, such that the UE, in needing to report channel state information, uses the obtained indication information and the mapping relation to determine measurement subsets related to reporting the channel state information, so as to report channel state information of the measurement subsets to the base station. In this way, not only the signaling overhead of the base station is lowered, but also the base station is made to obtain complete CSI.

FIG.3

**Description**

Technical Field

The present invention relates to the field of communications, and in particular to a method for reporting channel state information, base station and user equipment.

Background Art

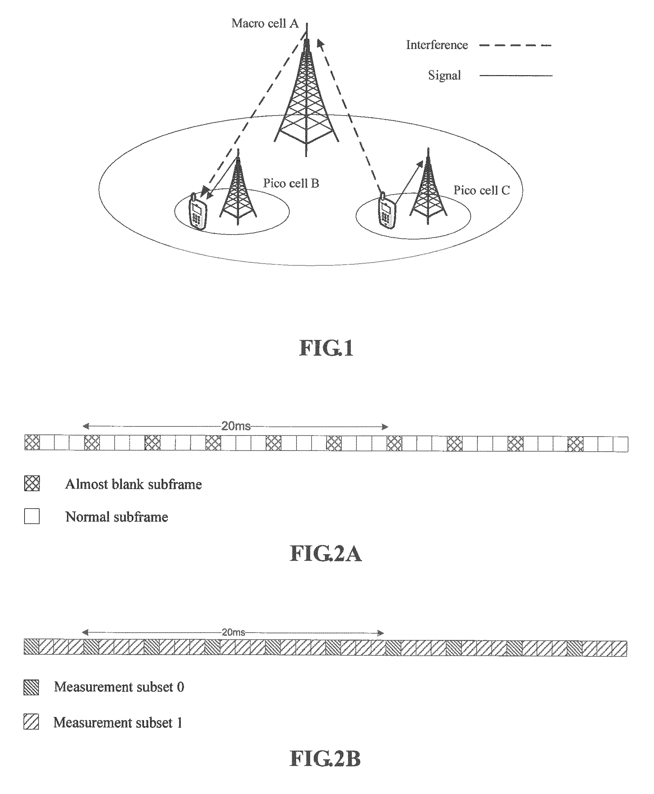

Currently, a long-term evolution-advanced (LTE-A) heterogeneous network consists of a macro cell, a femto cell, a pico cell, a remote radio head (RRH) and a relay. By deploying new radio nodes (such as a home eNodeB, a pico eNodeB, and an RRH), the system is improved with respect to capacity, provides better services to users in special areas, and is optimized with respect to performances. However, the newly deployed nodes will bring interference to the originally-deployed UE in a cell, even resulting in some coverage holes. Therefore, there is a need to further optimize the performances of the system by using an enhanced inter-cell interference coordination (eICIC) method. Figure 1 is a schematic diagram of a typical macro cell + pico cell. As shown in Fig. 1, the UE at an edge of the pico cell is subject to the downlink interference from the macro cell, and the UE of the macro cell is also subject to the uplink interference from the UE of the pico cell.

In order to solve the problem of downlink interference in a heterogeneous network, a solution of almost blank subframe (ABS) is employed in an LTE-A heterogeneous network. Wherein some of the subframes in the macro cell are selected as ABSs, in which no control signaling scheduling any UE to transmit data is transmitted, and no data corresponding to any UE is transmitted. Only some necessary information, such as CRS ( a common pilot signal ), is transmitted in these ABSs. At a temporal position corresponding to the ABSs, the pico cell may transmit control signaling scheduling UE data in the pico cell, and corresponding data, thereby suppressing interference from the macro cell.

In addition, in Rel.8/9, UE may periodically or aperiodically report channel state  information (CSI). Wherein the CSI comprises a channel quality indicator (CQI) of a downlink, and for some downlink transmission modes, it may comprise precoding matrix indicator (PMI) and rank indicator (RI) information.

In an LTE-A heterogeneous network, the report of CSI also comprises periodically reporting CSI and aperiodically reporting CSI. However, as ABSs substantially differ from normal subframes (NSFs), a plurality of measurement reference resource subsets (hereinafter referred to as measurement subsets) will be introduced, so as to report channel states respectively used for these two resources.

Figure 2A is a schematic diagram of configuration of ABSs and NSFs, and Figure 2B is a schematic diagram of a measurement subset corresponding to Fig. 2A. Wherein, measurement subsets are configured in the manner shown in Fig. 2B; for example, measurement subset 0 and measurement subset 1 are configured. Hence, when the UE reports CSI, the UE is unable to determine the measurement subset of which the CSI is fed back at the moment of report, if the method of periodically reporting CSI of Rel.B/9 is used; furthermore, resource collision will occur if CSI of more than one measurement subsets are reported at the same time.

In order to solve the problems above, following methods have been proposed so far, which shall be described below taking periodically reporting CSI by UE in a pico cell as an example, such as reporting CQI/PMI of a periodic wideband.

First method: the pico eNodeB is configured with the mapping relation as shown in Table 1, configures the UE with different indices $I_{CQI/PMI}$ for different measurement subsets, and notifies the UE of the configured mapping relation and the indices $I_{CQI/PMI}$ corresponding to the measurement subsets, and the UE stores the mapping relation and the indices $I_{CQI/PMI}$. For example, the index $I_{CQI/PMI}$ of the UE corresponding to measurement subset 0 is 5, and the index $I_{CQI/PMI}$ corresponding to measurement subset 1 is 3.

Table 1 shows a mapping relation. Wherein in Table 1, $I_{CQI/PMI}$ denotes indices (cqi-pmi-ConfigIndex), $N_P$ denotes a report period of CQI/PMI of the wideband, and $N_{OFFSET,CQI}$ denotes a report offset value of CQI/PMI of the wideband, i.e. indicating which one of the subframes in each period reports the CQI/PMI.

Table 1

| $I_{CQI/PMI}$ | $N_P$ value | $N_{OFFSET,CQI}$ value |
|---|---|---|
| $0 \leq I_{CQI/PMI} \leq 1$ | 2 | $I_{CQI/PMI}$ |
| $2 \leq I_{CQI/PMI} \leq 6$ | 5 | $I_{CQI/PMI} - 2$ |
| $7 \leq I_{CQI/PMI} \leq 16$ | 10 | $I_{CQI/PMI} - 7$ |
| $17 \leq I_{CQI/PMI} \leq 36$ | 20 | $I_{CQI/PMI} - 17$ |

(continued)

| $I_{CQI/PMI}$ | $N_P$ value | $N_{OFFSET,CQI}$ value |
|---|---|---|
| $37 \le I_{CQI/PMI} \le 76$ | 40 | $I_{CQI/PMI}$-37 |
| $77 \le I_{CQI/PMI} \le 156$ | 80 | $I_{CQI/PMI}$-77 |
| $157 \le I_{CQI/PMI} \le 316$ | 160 | $I_{CQI/PMI}$-157 |
| $I_{CQI/PMI}=317$ | Reserved | |
| $318 \le I_{CQI/PMI} \le 349$ | 32 | $I_{CQI/PMI}$-318 |
| $350 \le I_{CQI/PMI} \le 413$ | 64 | $I_{CQI/PMI}$-350 |
| $414 \le I_{CQI/PMI} \le 541$ | 128 | $I_{CQI/PMI}$-414 |
| $542 \le I_{CQI/PMI} \le 1023$ | Reserved | |

If the UE determines whether it is needed to report the CQI/PMI, the UElooked up the Table 1 according to the preconfigured indices $I_{CQI/PMI}$ of different measurement subsets, so as to obtain a report period $N_P$ and a report offset value $N_{OFFSET,CQI}$; and then the UE may determine it should report CQI/PMI, if the current subframe satisfies the following relation. In this way, the UE may determine to report the CQI/PMI of the measurement subset corresponding to the index $I_{CQI/PMI}$. Wherein the used relation is as follows:

$$\left(10 \times n_f + \lfloor n_s / 2 \rfloor - N_{OFFSET,CQI}\right) \bmod N_P = 0 \; ;$$

where, $n_f$ is a system frame number, and $n_s$ is a slot index within the frame, $n_s=\{0,1,..., 19\}$, which may be obtained via the current time, and shall not be described herein any further.

Furthermore, if an RI is reported, $I_{RI}$ may be likewise determined through the mapping relation shown in Table 2, and then it may be determined that the RI of the measurement subset corresponding to the $I_{RI}$ is needed to be reported. Wherein in Table 2, $I_{RI}$ denotes a configured index (ri-ConfigIndex), $M_{RI}$ denotes a period of reporting an RI, and $N_{OFFSET,RII}$ denotes an offset value, indicating which one of the subframes in each period reports the RI.

Table 2

| $I_{RI}$ | $M_{RI}$ value | $N_{OFFSET,RI}$ value |
|---|---|---|
| $0 \le I_{RI} \le 160$ | 1 | -$I_{RI}$ |
| $161 \le I_{RI} \le 321$ | 2 | - ($I_{RI}$-161) |
| $322 \le I_{RI} \le 482$ | 4 | - ($I_{RI}$-322) |
| $483 \le I_{RI} \le 643$ | 8 | - ($I_{RI}$-483) |
| $644 \le I_{RI} \le 804$ | 16 | - ($I_{RI}$-644) |
| $805 \le I_{RI} \le 965$ | 32 | - ($I_{RI}$-805) |
| $966 \le I_{RI} \le 1023$ | Reserved | |

Second method: if it is needed to report CSI of more than one resource subsets, the UE may select to report CSI of one measurement subset.

However, in the implementation of the present invention, the inventors found that following defects exist in the above methods: in the first method, indices for different measurement subsets need to be configured, and the signaling overhead is relatively high, which is double of that of Rel.8/9; and in the second method, the base station cannot obtain all the CSI, and a determination method is needed to select a measurement subset of which the CSI is reported; furthermore, different determination methods will result in different performances.

Furthermore, in an LTE-A heterogeneous network, aperiodic report of CSI is based on whether a measurement subframe (also referred to as a reference resource) belongs to measurement subset 0 or measurement subset 1. If it belongs to measurement subset 0, the CSI of measurement subset 0 shall be reported; and if it belongs to measurement subset 1, the CSI of measurement subset 1 shall be reported. However, in the implementation of the present invention, the inventors found that following defect exists in such a manner: when the measurement subframe belongs neither to measurement subset 0 nor to measurement subset 1, the report of CSI by the UE is actually meaningless.

It can be from above that there is no effective solution for the above problems.

It should be noted that the above description of the background art is merely provided for clear and complete explanation of the present invention and for easy understanding by those skilled in the art. And it should not be understood that the above technical solution is known to those skilled in the art as it is described in the background art of the present invention.

Summary of the Invention

An object of the embodiments of the present invention is to provide a method for reporting channel state information, base station and user equipment, wherein the base station may configure a plurality of groups of measurement subsets and establish a mapping relation between each measurement subset and indication information, so that the UE uses the mapping relation to determine the measurement subset related to a report of CSI and reports the CSI of the measurement subset. In this way, signaling overhead of the base station is lowered, and the base station is made to obtain complete CSI, solving the problems existing in the prior art.

According to one aspect of the embodiments of the present invention, there is provided a method for reporting channel state information, comprising:

configuring multiple groups of sets of measurement subset by a base station;

correspondingly storing the configured multiple groups of sets of measurement subset and corresponding indication information, so as to establish a mapping relation between the indication information and the sets of measurement subset; and

notifying the mapping relation to UE, such that the UE, in needing to report channel state information, uses the obtained indication information and the mapping relation to determine measurement subset related to reporting the channel state information, so as to report channel state information of the measurement subset to the base station.

According to another aspect of the embodiments of the present invention, there is provided a method for reporting channel state information, comprising:

using, by UE, obtained indication information and a prestored mapping relation between indication information and measurement subset, to determine the measurement subset corresponding to the indication information, if the UE determines that channel state information needs to be reported; and

reporting the determined channel state information of the measurement subset by the UE to the base station.

According to still another aspect of the embodiments of the present invention, there is provided a base station, comprising:

a first information configuring unit configured to configure multiple groups of sets of measurement subset;

a first information storing unit configured to correspondingly store the configured multiple sets of measurement subset and corresponding indication information, so as to establish a mapping relation between the indication information and the sets of measurement subset; and

a first information transmitting unit configured to notify the mapping relation to UE, such that the UE, in needing to report channel state information, uses the obtained indication information and the mapping relation to determine measurement subset related to reporting the channel state information, so as to report channel state information of the measurement subset to the base station.

According to further still another aspect of the embodiments of the present invention, there is provided UE, comprising:

a first determining unit configured to determine whether channel state information needs to be reported;

a second determining unit configured to determine, according to obtained indication information and a prestored mapping relation between indication information and measurement subset, measurement subset corresponding to the indication information if the determination result of the first determining unit is positive; and

a second information transmitting unit configured to report the determined channel state information of the measurement subset to a base station.

According to further still another aspect of the embodiments of the present invention, there is provided a method for reporting channel state information, comprising:

generating downlink control information by a base station, the downlink control information comprising first indication information indicating whether UE to report aperiodic channel state information, and when the aperiodic channel state information is to be reported, further comprising second indication information indicating to report channel state information of related measurement subset; and
transmitting the downlink control information by the base station to the UE, so that the UE transmits the channel state information according to the first and second indication information contained in the downlink control information and a preconfigured mapping relation between the second indication information and sets of measurement subset.

According to further still another aspect of the embodiments of the present invention, there is provided a method for reporting channel state information, comprising:

receiving, by UE, downlink control information transmitted by a base station, the downlink control information comprising first indication information indicating whether the UE to report aperiodic channel state information, and when the aperiodic channel state information is to be reported, further comprising second indication information indicating to report channel state information of related measurement subset; and
transmitting the channel state information by the UE according to the first and second indication information contained in the downlink control information and a preconfigured mapping relation between the second indication information and sets of measurement subset.

According to further still another aspect of the embodiments of the present invention, there is provided a base station, comprising:

an information generating unit configured to generate downlink control information, the downlink control information comprising first indication information indicating whether UE to report aperiodic channel state information, and when the aperiodic channel state information is to be reported, further comprising second indication information indicating to report channel state information of related measurement subset;
a third information transmitting unit configured to transmit the downlink control information to the UE, so that the UE transmits the channel state information according to the first and second indication information contained in the downlink control information and a preconfigured mapping relation between the second indication information and sets of measurement subset.

According to further still another aspect of the embodiments of the present invention, there is provided UE, comprising:

an information receiving unit configured to receive downlink control information transmitted by a base station, the downlink control information comprising first indication information indicating whether UE to report aperiodic channel state information, and when the aperiodic channel state information is to be reported, further comprising second indication information indicating to report channel state information of related measurement subset; and
a fifth information transmitting unit configured to transmit the channel state information according to the first and second indication information contained in the downlink control information and a preconfigured mapping relation between the second indication information and sets of measurement subset.

According to further still another aspect of the embodiments of the present invention, there is provided a computer-readable program, wherein when the program is executed in a base station, the program enables the computer to carry out the method for reporting channel state information as described above in the base station.
According to further still another aspect of the embodiments of the present invention, there is provided a storage medium in which a computer-readable program is stored, wherein the computer-readable program enables the computer to carry out the method for reporting channel state information as described above in a base station.
According to further still another aspect of the embodiments of the present invention, there is provided a computer-readable program, wherein when the program is executed in UE, the program enables the computer to carry out the method for reporting channel state information as described above in the UE.
According to further still another aspect of the embodiments of the present invention, there is provided a storage medium in which a computer-readable program is stored, wherein the computer-readable program enables the computer to carry out the method for reporting channel state information as described above in UE.
The advantages of the embodiments of the present invention exist in: the base station may configure a plurality of groups of sets of measurement subset and establish a mapping relation between each group of set of measurement subset and indication information, so that the UE uses the mapping relation to determine the measurement subset related to a report of CSI and reports the CSI of the measurement subset. In this way, signaling overhead of the base station is lowered, and the base station is made to obtain complete CSI. And the manner of configuration is flexible, applicable to a case of periodically reporting CSI and to a case of aperiodically reporting CSI.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

Brief Description of the Drawings

Figure 1 is a schematic diagram of a typical macro cell + pico cell;
Figure 2A is a schematic diagram of configuration ofABSs and NSFs;
Figure 2B is a schematic diagram of a measurement subset corresponding to Fig. 2A;
Figure 3 is a flowchart of the method for reporting channel state information of Embodiment 1 of the present invention;
Figure 4 is a flowchart of the method for reporting channel state information of Embodiment 2 of the present invention;
Figure 5 is a schematic diagram of the structure of the base station of Embodiment 3 of the present invention;
Figure 6 is a schematic diagram of the structure of the UE of Embodiment 4 of the present invention;
Figure 7 is a flowchart of the method for reporting channel state information of Embodiment 5 of the present invention;
Figure 8 is a flowchart of the method for reporting channel state information of Embodiment 6 of the present invention;
Figure 9 is a flowchart of carrying out step 802 of Embodiment 6 of the present invention;
Figure 10 is a schematic diagram of the structure of the base station of Embodiment 7 of the present invention; and
Figure 11 is a schematic diagram of the structure of the UE of Embodiment 8 of the present invention.

Detailed Description of the Invention

Various embodiments of the present invention are described as follows with reference to the drawings. These embodiments are illustrative only and are not intended to limit the present invention. For easy understanding of the principle and embodiments of the present invention by those skilled in the art, the embodiments of the present invention are described taking reporting CSI in an LTE-A heterogeneous network system as an example. However, it should be understood that the present invention is not limited to the above system and is applicable to any system related to reporting CSI.

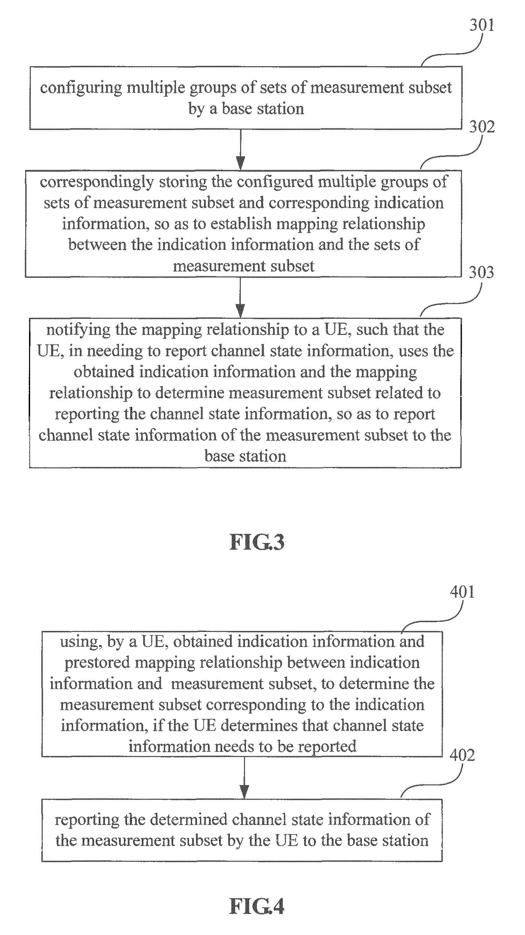

Fig. 3 is a flowchart of the method for reporting channel state information of Embodiment 1 of the present invention. As shown in Fig. 3, the method comprises:

step 301: configuring multiple groups of sets of measurement subset by a base station;
step 302: correspondingly storing the configured multiple groups of sets of measurement subset and corresponding indication information, so as to establish a mapping relation between the indication information and the sets of measurement subset; and
step 303: notifying the mapping relation to UE, such that the UE, in needing to report channel state information, uses the obtained indication information and the mapping relation to determine measurement subset related to reporting the channel state information, so as to report channel state information of the measurement subset to the base station.

It can be seen from the above embodiment that the base station configures a plurality of groups of sets of measurement subset and establishes a mapping relation between each group of set of measurement subset and indication information, so that the UE uses the mapping relation to determine the measurement subset of which the CSI is reported and reports the CSI of the measurement subset. In this way, signaling overhead is lowered, and the base station is made to obtain complete CSI. And the method is applicable to a case of periodically reporting CSI and to a case of aperiodically reporting CSI.

In this embodiment, in step 301, if the measurement subsets are configured according to Fig. 2B, the sets of the measurement subset configured by the base station may comprise serial numbers of the measurement subsets, such as 0 or 1, respectively denoting that CSI of measurement subset 0 or CSI of measurement subset 1 is transmitted. In this embodiment, the configuration of the measurement subsets shown in Fig. 2B is an embodiment of the present invention only. However, the present invention is not limited thereto, and the measurement subsets may be configured arbitrarily as actually required; and the number of the measurement subsets is not limited to two, and any number of measurement subsets may be configured.

In this embodiment, in step 302, corresponding to different sets of measurement subset, a corresponding number of bits may be used to carry the indication information according to the number of the configured sets of measurement subset. Wherein the indication information is configured to indicate the measurement subsets related to the report of CSI. For example, if 4 groups of sets of measurement subset are configured, 2 bits may be used to carry the indication information; that is, the states to which the 2 bits correspond respectively indicate different sets of measurement subset.

Wherein when the CSI is periodically reported, the indication information may be sent to the UE by the base station, and may be transmitted, together with data, in a PDSCH. And when the CSI is aperiodically reported, the indication information may be sent to the UE by the base station via downlink control information (DCI) or corresponding authorization of random access.

In this embodiment, the base station may perform the configuration via high-layer information, such as radio resource control (RRC) signaling.

In this embodiment, the set of measurement subset may comprise only one measurement subset, for example, measurement subset 0 or measurement subset 1.

In this embodiment, the set of measurement subset may comprise more than one measurement subsets and report modes based on the more than one measurement subsets. For example, the set of measurement subset comprises measurement subset 0 and measurement subset 1 and report modes based on measurement subset 0 and measurement subset 1. Wherein the report modes may be arbitrarily configured as actually required; for example, a report mode may be alternatively reporting CSI of the two measurement subsets, or may be periodically or aperiodically alternatively reporting CSI of measurement subset 0 and measurement subset 1; for another example, a report mode may also be that if CSI is reported three times, CSI of measurement subset 0 is reported twice, and CSI of measurement subset 1 reported once. It can be seen that such a manner of configuration is very flexible, and appropriate configuration may be performed as actually required.

Furthermore, the set of the measurement subsets may comprise frequencies of reporting CSI corresponding to each of the measurement subsets.

It can be seen from the above embodiment that the base station configures a plurality of groups of sets of measurement subset and establishes a mapping relation between each group of set of measurement subset and indication information, so that the UE uses the mapping relation to determine the measurement subset of which the CSI is reported and reports the CSI of the measurement subset. In this way, signaling overhead is lowered, and the base station is made to obtain complete CSI. And the method is applicable to a case of periodically reporting CSI and to a case of aperiodically reporting CSI.

Following description is given with reference to Figs. 2A and 2B taking that 2 bits and 3 bits are used to respectively carry the indication information as examples; wherein the system comprises 2 measurement subsets, i.e. measurement subset 0 and measurement subset 1.

Example 1:

The base station may configure a plurality of groups of sets of measurement subset related to reporting CSI as shown in Table 3, and correspondingly store the configured plurality of sets of measurement subset and indication information.

For example, Table 3 shows a corresponding relation between 2 bits of indication information and the sets of measurement subset. Wherein three groups of sets of measurement subset are configured, and another group is reserved; and wherein in the configured three groups of sets of measurement subsets, two groups of sets of measurement subset comprise a measurement subset, and one group of set of measurement subset comprises more than one measurement subsets and report modes based on the more than one measurement subsets. In Table 3, the set of measurement subset to which "01" corresponds comprises 2 measurement subsets, and the corresponding report mode is: alternatively reporting CSI of measurement subset 0 and measurement subset 1. Wherein, this is implemented in a manner as follows: determining a measurement subset related to report of CSI by judging whether a relation in the table is satisfied. In this way, when a configured set of measurement subset comprises more than one measurement subsets, the base station may configure predetermined conditions corresponding to the measurement subsets, i.e. the relation in the table, and determine related measurement subsets by judging whether the predetermined conditions are satisfied.

Table 3

| 2 bits Value of $I_{ABS}$ | Measurement subset related to report of CSI |
|---|---|
| 00 | Measurement subset 0 only |
| 01 | If $((10 \times n_f + \lfloor n_s / 2 \rfloor - N_{OFFSET,CQI})/N_P)\bmod 2 == 0$ , it is measurement subset 0<br>If $((10 \times n_f + \lfloor n_s / 2 \rfloor - N_{OFFSET,CQI})/N_P)\bmod 2 == 1$ , it is measurement subset 1 |
| 10 | Reserved |
| 11 | Measurement subset 1 only |

As shown in Table 3, the states to which 2 bits of indication information corresponds (i.e. 2 bits Value of $I_{ABS}$) may be "00/01/10/11"; wherein when the state to which the indication information corresponds is "00", it can be seen that the measurement subset related to the report of CSI is measurement subset 0, that is, indicating that CSI of measurement subset 0 is only transmitted; when the state to which the indication information corresponds is "11", it can be seen that the measurement subset related to the report of CSI is measurement subset 1, that is, indicating that CSI of measurement subset 1 is only transmitted; when the indication information is "10", it is a reserved state and corresponds to no measurement subset; and when the indication information is "01", it can be seen that the measurement subsets related to the report of CSI comprise measurement subset 0 and measurement subset 1, and it corresponds to measurement subset 0 when formula $((10 \times n_f + \lfloor n_s / 2 \rfloor - N_{OFFSET,CQI})/N_P)\bmod 2 == 0$ is satisfied, and corresponds to measurement subset 1 when formula $((10 \times n_f + \lfloor n_s / 2 \rfloor - N_{OFFSET,CQI})/N_P)\bmod 2 == 1$ is satisfied. Wherein, the meanings of the physical quantities concerned in these formulae are as described in the background art and shall not be described herein any further. In the above formulae, Np is first divided integrally, and then modulo operation is performed to 2.

Furthermore, the base station may notify the UE of the configured mapping relation as shown in Table 3. After obtaining the mapping relation, the UE may look up a corresponding group of measurement subsets according to pre-known 2 bits of indication information in case of needing to report CSI. For example, if the 2 bits of indication information corresponds to "01", it can be found through looking up the table that the corresponding measurement subset is measurement subset 0 or measurement subset 1. In such a case, the UE may determine a final measurement subset by judging whether a formula $((10 \times n_f + \lfloor n_s / 2 \rfloor - N_{OFFSET,CQI})/N_P)\bmod 2 == 0$ or a formula $((10 \times n_f + \lfloor n_s / 2 \rfloor - N_{OFFSET,CQI})/N_P)\bmod 2 == 1$ is satisfied; and if it is judged that the condition $((10 \times n_f + \lfloor n_s / 2 \rfloor - N_{OFFSET,CQI})/N_P)\bmod 2 == 1$ is satisfied, it can be determined that the final measurement subset is measurement subset 1.

Furthermore, in Table 3, for aperiodically reporting CSI, the "10" may be configured as transmitting CSI based on the measurement of the reference resource as provided in Rel.8/9. The detailed method is as described in Rel.8/9, and shall not described herein any further.

In this embodiment, for periodically reporting CSI, the UE may determine whether it is needed to report CSI by using any existing manner of judgment, which is as described in the background art, and shall not described herein any further. Furthermore, the 2 bits of indication information shown in Table 3 is sent to the UE by the base station, and the base station may send the indication information, together with data, to the UE in a PDSCH.

For aperiodically reporting CSI, judging by the UE whether it is needed to report CSI is similar to the prior art, which may be performed by using the indication information in the DCI sent by the base station. For example, 2 bits of "CQI request" in DCI format 0 may be used to carry the indication information indicating whether to transmit CSI, and the UE may judge whether to report the CSI according to the indication information. Furthermore, the 2 bits of indication information shown in Table 3 may be carried by several bits in the DCI and is sent to the UE. It can be seen from above that the base station may configure and correspondingly store sets of measurement subset related to report of CSI. In this way, after obtaining the mapping relation, the UE may determine the measurement subset of which the CSI is to be transmitted by using the mapping relation in case that it is determined that CSI needs to be reported, and transmit the CSI of the measurement subset to the base station. Therefore, only 2 bits are needed to indicate a measurement subset, making the signaling overhead of the base station relatively low, compatibility relatively good, and the manner of configuration is relatively flexible.

Example 2

Similar to Example 1, in this example, the reserved 2 bits in Table 3 are used to indicate a measurement subset. Wherein when the indication information is "10", it can be seen that the measurement subsets comprise measurement subset 0 and measurement subset 1, and CSI of measurement subset 0 and measurement subset 1 are reported alternatively, as shown in Table 4; in particular, in three times of report, two times of report are based on measurement subset 0, and one time of report is based on measurement subset 1. In this embodiment, the above manner of report may be carried out by judging whether the following relations are satisfied.

For example, when relation $((10 \times n_f + \lfloor n_s / 2 \rfloor - N_{OFFSET,CQI})/N_P)\mathrm{mod}3==0$ is satisfied, it corresponds to measurement subset 0, when relation $((10 \times n_f + \lfloor n_s / 2 \rfloor - N_{OFFSET,CQI})/N_P)\mathrm{mod}3==1$ is satisfied, it corresponds to measurement subset 0, and when relation $((10 \times n_f + \lfloor n_s / 2 \rfloor - N_{OFFSET,CQI})/N_P)\mathrm{mod}3 == 2$ is satisfied, it corresponds to measurement subset 1.

Table 4

| 2 bits Value of $I_{ABS}$ | Measurement subset related to report of CSI |
| --- | --- |
| 00 | Measurement subset 0 only |
| 01 | If $((10 \times n_f + \lfloor n_s/2 \rfloor - N_{OFFSET,CQI})/N_P)\mathrm{mod}2==0$, it is measurement subset 0 <br> If $((10 \times n_f + \lfloor n_s/2 \rfloor - N_{OFFSET,CQI})/N_P)\mathrm{mod}2==1$, it is measurement subset 1 |
| 10 | If $((10 \times n_f + \lfloor n_s/2 \rfloor - N_{OFFSET,CQI})/N_P)\mathrm{mod}3==0$ it is measurement subset 0 <br> If $((10 \times n_f + \lfloor n_s/2 \rfloor - N_{OFFSET,CQI})/N_P)\mathrm{mod}3==1$, it is measurement subset 0 <br> If $((10 \times n_f + \lfloor n_s/2 \rfloor - N_{OFFSET,CQI})/N_P)\mathrm{mod}3==2$, it is measurement subset 1 |
| 11 | Measurement subset 1 only |

It can be seen from above that the base station may configure flexibly as actually required, with signaling overhead being relatively low.

Example 3

The base station may configure a plurality of groups of sets of measurement subset related to reporting CSI as shown in Table 5, and correspondingly store the configured plurality of sets of measurement subset and indication information.

For example, Table 5 shows a corresponding relation between 3 bits of indication information and the measurement subsets. Wherein eight groups of sets of measurement subset are configured; wherein in the configured eight groups of sets of measurement subset, two groups of sets of measurement subset comprise a measurement subset, that is, measurement subset 0 or measurement subset 1; and other sets of measurement subsets comprise measurement subset 0 and measurement subset 1 and the corresponding report modes based on the measurement subsets. The report modes may be implemented by judging whether a relation in Table 5 is satisfied.

Table 5

| 3 bits Value of $I_{ABS}$ | Measurement subset related to report of CSI |
| --- | --- |
| 000 | Measurement subset 0 only |
| 001 | If $((10 \times n_f + \lfloor n_s/2 \rfloor - N_{OFFSET,CQI})/N_P)\mathrm{mod}2==0$, it is measurement subset 0 <br> If $((10 \times n_f + \lfloor n_s/2 \rfloor - N_{OFFSET,CQI})/N_P)\mathrm{mod}2==1$, it is measurement subset 1 |
| 010 | If $((10 \times n_f + \lfloor n_s/2 \rfloor - N_{OFFSET,CQI})/N_P)\mathrm{mod}2==0$, it is measurement subset 0 <br> If $((10 \times n_f + \lfloor n_s/2 \rfloor - N_{OFFSET,CQI})/N_P)\mathrm{mod}3==1$, it is measurement subset 0 <br> If $((10 \times n_f + \lfloor n_s/2 \rfloor - N_{OFFSET,CQI})/N_P)\mathrm{mod}3==2$, it is measurement subset 1 |
| 011 | If $((10 \times n_f + \lfloor n_s/2 \rfloor - N_{OFFSET,CQI})/N_P)\mathrm{mod}3==0$, it is measurement subset 0 <br> If $((10 \times n_f + \lfloor n_s/2 \rfloor - N_{OFFSET,CQI})/N_P)\mathrm{mod}3==1$, it is measurement subset 1 <br> If $((10 \times n_f + \lfloor n_s/2 \rfloor - N_{OFFSET,CQI})/N_P)\mathrm{mod}3==2$, it is measurement subset 1 |
| 100 | If $((10 \times n_f + \lfloor n_s/2 \rfloor - N_{OFFSET,CQI})/N_P)\mathrm{mod}5==0$, it is measurement subset 0 <br> If $((10 \times n_f + \lfloor n_s/2 \rfloor - N_{OFFSET,CQI})/N_P)\mathrm{mod}5==1$, it is measurement subset 0 <br> If $((10 \times n_f + \lfloor n_s/2 \rfloor - N_{OFFSET,CQI})/N_P)\mathrm{mod}5==2$, it is measurement subset 0 <br> If $((10 \times n_f + \lfloor n_s/2 \rfloor - N_{OFFSET,CQI})/N_P)\mathrm{mod}5==3$, it is measurement subset 0 <br> If $((10 \times n_f + \lfloor n_s/2 \rfloor - N_{OFFSET,CQI})/N_P)\mathrm{mod}5==4$, it is measurement subset 1 |
| 101 | If $((10 \times n_f + \lfloor n_s/2 \rfloor - N_{OFFSET,CQI})/N_P)\mathrm{mod}5==0$, it is measurement subset 0 <br> If $((10 \times n_f + \lfloor n_s/2 \rfloor - N_{OFFSET,CQI})/N_P)\mathrm{mod}5==1$, it is measurement subset 1 |

(continued)

| 3 bits Value of $I_{ABS}$ | Measurement subset related to report of CSI |
|---|---|
| | If $((10 \times n_f + \lfloor n_s/2 \rfloor - N_{OFFSET,CQI})/N_P)\mathrm{mod}5{=}{=}2$, it is measurement subset 1 |
| | If $((10 \times n_f + \lfloor n_s/2 \rfloor - N_{OFFSET,CQI})/N_P)\mathrm{mod}5{=}{=}3$, it is measurement subset 1 |
| | If $((10 \times n_f + \lfloor n_s/2 \rfloor - N_{OFFSET,CQI})/N_P)\mathrm{mod}5{=}{=}4$, it is measurement subset 0 |
| 110 | If $((10 \times n_f + \lfloor n_s/2 \rfloor - N_{OFFSET,CQI})/N_P)\mathrm{mod}5{=}{=}0$, it is measurement subset 0 |
| | If $((10 \times n_f + \lfloor n_s/2 \rfloor - N_{OFFSET,CQI})/N_P)\mathrm{mod}5{=}{=}1$, it is measurement subset 0 |
| | If $((10 \times n_f + \lfloor n_s/2 \rfloor - N_{OFFSET,CQI})/N_P)\mathrm{mod}5{=}{=}2$, it is measurement subset 1 |
| | If $((10 \times n_f + \lfloor n_s/2 \rfloor - N_{OFFSET,CQI})/N_P)\mathrm{mod}5{=}{=}3$, it is measurement subset 1 |
| | If $((10 \times n_f + \lfloor n_s/2 \rfloor - N_{OFFSET,CQI})/N_P)\mathrm{mod}5{=}{=}4$, it is measurement subset 1 |
| 111 | Measurement subset 1 only |

As shown in Table 5, the states to which 3 bits of indication information corresponds (i.e. 3 bits Value of $I_{ABS}$) may be "000/001/010/011/100/101/110/111"; wherein different indication information indicates different sets of measurement subset. Particulars are similar to those in examples 1 and 2, and shall not be described herein any further.

Furthermore, the base station may notify the UE of the configured mapping relation as shown in Table 3. After obtaining the mapping relation, the UE may look up a corresponding group of measurement subsets according to pre-known 3 bits of indication information in case of needing to report CSI. For example, if the 3 bits of indication information corresponds to "000", it can be found through looking up the table that the corresponding measurement subset is measurement subset 0, and if the 3 bits of indication information corresponds to "010", it can be found through looking up the table that the corresponding measurement subset is measurement subset 0 and measurement subset 1. In such a case, the UE may determine a final measurement subset according to the following relation; wherein if the result of judgment is that relation $((10 \times n_f + \lfloor n_s/2 \rfloor - N_{OFFSET,CQI})/N_P)\mathrm{mod}3 = 2$ is satisfied, it can be determined that the final measurement subset is measurement subset 1.

It can be seen from above that the base station may configure and correspondingly store sets of measurement subset related to report of CSI. In this way, after obtaining the mapping relation, the UE may determine a corresponding measurement subset by using the mapping relation, and transmit the CSI of the measurement subset to the base station. Therefore, only 2 bits are needed to indicate a measurement subset, making the signaling overhead of the base station relatively low, compatibility relatively good, and the manner of configuration is relatively flexible.

Example 4

Above examples 1-3 are described taking that 2 bits and 3 bits respectively carry the indication information with reference to Figs. 2A and 2B as examples. And two measurement subsets are included, that is, measurement subset 0 and measurement subset 1.

Furthermore, in this embodiment, it is not limited to two measurement subsets, and three or more measurement subsets may be included. For example, all the subframes intended to be used for measurement may be divided into three subsets, each thirty subframes, such as 0th, 3th, 6th, 27th...subframes, constituting subset 0, 1th, 4th, 7th, 28th...subframes, constituting subset 1, and 2th, 5th, 8th, 29th...subframes, constituting subset 2.

Following description is given taking that three measurement subsets, i.e. measurement subset 0, measurement subset 1 and measurement subset 2, are included, as examples.

The base station may configure a plurality of groups of sets of measurement subset related to reporting CSI as shown in Table 6, and correspondingly store the configured plurality of sets of measurement subset and indication information.

For example, Table 6 shows a corresponding relation between 3 bits of indication information and the measurement subset. Wherein eight groups of measurement subsets are configured; wherein in the configured eight groups of sets of measurement subset, three groups of sets of measurement subset comprise a measurement subset, that is, measurement subset 0 or measurement subset 1 or measurement subset 2; and other sets of measurement subset comprise measurement subset 0, measurement subset 1 and measurement subset 2, and the particular report modes may be implemented by using the relations in Table 6.

Table 6

| 3 bits Value of $I_{ABS}$ | Measurement subset related to report of CSI |
|---|---|
| 000 | Measurement subset 0 only |

(continued)

| 3 bits Value of $I_{ABS}$ | Measurement subset related to report of CSI |
|---|---|
| 001 | Measurement subset 1 only |
| 010 | Measurement subset 2 only |
| 011 | If $((10 \times n_f + \lfloor n_s/2 \rfloor - N_{OFFSET,CQI})/N_P)\bmod 3 == 0$, it is measurement subset 0<br>If $((10 \times n_f + \lfloor n_s/2 \rfloor - N_{OFFSET,CQI})/N_P)\bmod 3 == 1$, it is measurement subset 1<br>If $((10 \times n_f + \lfloor n_s/2 \rfloor - N_{OFFSET,CQI})/N_P)\bmod 3 == 2$, it is measurement subset 2 |
| 100 | If $((10 \times n_f + \lfloor n_s/2 \rfloor - N_{OFFSET,CQI})/N_P)\bmod 3 == 0$, it is measurement subset 0<br>If $((10 \times n_f + \lfloor n_s/2 \rfloor - N_{OFFSET,CQI})/N_P)\bmod 3 == 1$, it is measurement subset 0<br>If $((10 \times n_f + \lfloor n_s/2 \rfloor - N_{OFFSET,CQI})/N_P)\bmod 3 == 2$, it is measurement subset 1 |
| 101 | If $((10 \times n_f + \lfloor n_s/2 \rfloor - N_{OFFSET,CQI})/N_P)\bmod 3 == 0$, it is measurement subset 0<br>If $((10 \times n_f + \lfloor n_s/2 \rfloor - N_{OFFSET,CQI})/N_P)\bmod 3 == 1$, it is measurement subset 2<br>If $((10 \times n_f + \lfloor n_s/2 \rfloor - N_{OFFSET,CQI})/N_P)\bmod 3 == 2$, it is measurement subset 2 |
| 110 | If $((10 \times n_f + \lfloor n_s/2 \rfloor - N_{OFFSET,CQI})/N_P)\bmod 3 == 0$, it is measurement subset 1<br>If $((10 \times n_f + \lfloor n_s/2 \rfloor - N_{OFFSET,CQI})/N_P)\bmod 3 == 1$, it is measurement subset 1<br>If $((10 \times n_f + \lfloor n_s/2 \rfloor - N_{OFFSET,CQI})/N_P)\bmod 3 == 2$, it is measurement subset 2 |
| 111 | If $((10 \times n_f + \lfloor n_s/2 \rfloor - N_{OFFSET,CQI})/N_P)\bmod 3 == 0$, it is measurement subset 1<br>If $((10 \times n_f + \lfloor n_s/2 \rfloor - N_{OFFSET,CQI})/N_P)\bmod 3 == 1$, it is measurement subset 2<br>If $((10 \times n_f + \lfloor n_s/2 \rfloor - N_{OFFSET,CQI})/N_P)\bmod 3 == 2$, it is measurement subset 2 |

As shown in Table 6, the states to which 3 bits of indication information corresponds (i.e. 3 bits Value of $I_{ABS}$) may be "000/001/010/011/100/101/110/111"; wherein different indication information indicates different measurement subsets. Particulars are similar to those in examples 1 and 2, and shall not be described herein any further.

Furthermore, the base station may notify the UE of the configured mapping relation as shown in Table 3. After obtaining the mapping relation, the UE may look up a corresponding group of measurement subset according to pre-known 3 bits of indication information in case of needing to report CSI. For example, if the 3 bits of indication information corresponds to "000", it can be found through looking up the table that the corresponding measurement subset is measurement subset 0, if the 3 bits of indication information corresponds to "010", it can be found through looking up the table that the corresponding measurement subset is measurement subset 2, and if the 3 bits of indication information corresponds to "011", it can be found through looking up the table that the corresponding group of measurement subsets is measurement subset 0, measurement subset 1 and measurement subset 2. In such a case, the UE may determine a final measurement subset according to a predetermined condition; wherein if the result of judgment is that relation $((10 \times n_f + \lfloor n_s/2 \rfloor - N_{OFFSET,CQI})/N_P)\bmod 3 = 2$ is satisfied, it can be determined that the final measurement subset is measurement subset 2.

It can be seen from above that the base station may configure and correspondingly store sets of measurement subset related to report of CSI. In this way, after obtaining the mapping relation, the UE may determine a corresponding measurement subset by using the mapping relation, and transmit the CSI of the measurement subset to the base station. Therefore, only 2 bits are needed to indicate a measurement subset, making the signaling overhead of the base station relatively low, and compatibility relatively good.

It can be seen from above embodiment that the manner of configuration makes signaling overhead relatively low, configuration flexible, and unlimited by a measurement subset. A corresponding measurement subset may be configured according to a predetermined condition, further improving the flexibility of the configuration, and the method is applicable to a case of periodically reporting CSI and to a case of aperiodically reporting CSI.

Fig. 4 is a flowchart of the method for reporting channel state information of Embodiment 2 of the present invention. As shown in Fig. 4, the method comprises:

> step 401: using, by UE, obtained indication information and a prestored mapping relation between indication information and sets of measurement subset, to determine the measurement subset corresponding to the indication information, if the UE determines that CSI needs to be reported; and
>
> step 402: reporting the determined CSI of the measurement subset by the UE to the base station.

In this embodiment, the UE may report the CSI periodically, and may report the CSI aperiodically. When the UE determines that CSI needs to be reported, the UE may use the mapping relation preconfigured by the base station to determine a corresponding measurement subset, and transmit CSI of the measurement subset to the base station.

In this embodiment, in step 401, for periodically reporting CSI, the UE may determine whether it is needed to report CSI by using any existing manner of judgment, which is as described in the background art (with reference to Table 1 and the relations), and shall not described herein any further. Furthermore, the indication information is sent to the UE by the base station, and the base station may send the indication information, together with data, to the UE in a PDSCH.

For aperiodically reporting CSI, judging by the UE whether it is needed to report CSI is similar to the prior art, which may be performed by using the indication information in the DCI sent by the base station. For example, 2 bits of "CQI request" in DCI format 0 may be used to carry the indication information indicating whether to transmit CSI, and the UE may judge whether to report the CSI according to the indication information. Furthermore, the indication information in step 401 may be carried by several bits in the DCI and is sent to the UE.

In this embodiment, before determining by the UE whether to report CSI, the method may further comprise: receiving and storing a mapping relation between indication information and measurement subsets configured by the base station.

In this embodiment, as shown in tables 3-6, the base station may configure a  plurality of groups of sets of measurement subset, at least one group of set of the plurality of sets of measurement subset comprising a measurement subset, indicating that the UE needs only to transmit the CSI of the measurement subset. Furthermore, at least one group of set of the plurality groups of sets of measurement subset comprises more than one measurement subsets and report modes based on the more than one measurement subsets, indicating that the UE needs to determine the measurement subset of which the CSI is to be transmitted according to a predetermined report mode. Wherein, the report mode may be arbitrarily set as actually required.

It can be seen from the above embodiment that the UE may determine a corresponding measurement subset by using the mapping relation configured by the base station, and transmit the CSI of the measurement subset to the base station. In this way, the indicated measurement subset may be determined with relatively low signaling overhead, and the CSI may be reported according to the indicated measurement subset, not only making the base station to obtain relatively complete CSI, but also avoiding resource collision.

The embodiments of the present invention provide also a base station and UE, as described in embodiments 3 and 4 below. As the principle of the base station and UE for solving problems is similar to that of the above method for reporting channel state information based on a base station and UE of embodiments 1-2, the implementation of the method may be referred to for the implementation of the base station and UE, and the repeated parts shall not be described any further.

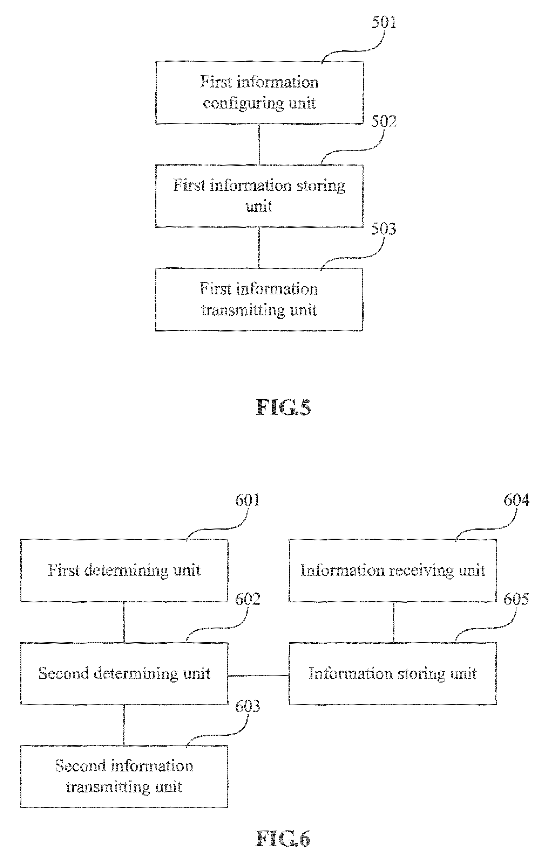

Fig. 5 is a schematic diagram of the structure of the base station of Embodiment 3 of the present invention. As shown in Fig. 5, the base station comprises: a first information configuring unit 501, a first information storing unit 502 and a first information transmitting unit 503; wherein,

the first information configuring unit 501 is configured to configure multiple groups of sets of measurement subset; the first information storing unit 502 is configured to correspondingly store the configured multiple groups of sets of measurement subset and corresponding indication information, so as to establish a mapping relation between the indication information and the sets of measurement  subset, and the first information transmitting unit 503 is configured to notify the mapping relationship to a UE, such that the UE, in needing to report channel state information, uses the obtained indication information and the mapping relation to determine measurement subset related to reporting the channel state information, so as to report channel state information of the measurement subset to the base station.

Wherein multiple groups of sets of measurement subset related to report of CSI configured by the first information configuring unit 501 are as shown in tables 3-6, which shall not be described herein any further. And wherein the configuration may be performed via high-layer signaling, such as RRC, and 2 bits or 3 bits may used to carry the indication information according to the indicated number of states.

In addition, the operational process of the base station is as shown in Fig. 3, which shall not be described herein any further.

In this embodiment, as shown in tables 3-6, the base station may configure multiple groups of sets of measurement subset, at least one group of set of the plurality of sets of measurement subset comprising one measurement subset, indicating that the UE needs only to transmit the CSI of the measurement subset. Furthermore, at least one group of set of the plurality groups of sets of measurement subset comprises more than one measurement subsets and report modes based on the more than one measurement subsets, indicating that the UE needs to transmit the CSI of the corresponding measurement subset according to a predetermined report mode. Wherein, the report mode may be arbitrarily set as actually required.

It can be seen from above that the base station may configure and correspondingly store measurement subset related to transmit the CSI. In this way, after obtaining the mapping relationship, the UE may determine a corresponding measurement subset by using the mapping relationship, and transmit the CSI of the measurement subset to the base station. Therefore, only 2 bits are needed to indicate a measurement subset, making the signaling overhead of the base station relatively low, and compatibility relatively good.

Fig. 6 is a schematic diagram of the structure of the UE of Embodiment 4 of the present invention. As shown in Fig. 6, the UE comprises: a first determining unit 601, a second determining unit 602 and a second information transmitting unit 603; wherein the first determining unit 601 is configured to determine whether channel state information needs to be reported, the second determining unit 602 is configured to determine, according to obtained indication information and a prestored mapping relationship between indication information and measurement subset, measurement subset corresponding to the indication information if the determination result of the first determining unit 601 is positive, and the second information transmitting unit 603 is configured to report the determined channel state information of the measurement subset to a base station.

Wherein, the manners of determination of the first determining unit 601 and the second determining unit are as described in embodiments 1 and 2, which shall not be described herein any further.

In this embodiment, as shown in Fig. 6, the UE may further comprise an information receiving unit 604 configured to receive multiple groups of sets of measurement subset corresponding to the indication information configured by the base station; furthermore, it may comprise an information storing unit 605 configured to store a corresponding relationship between the indication information and a set of measurement subsets, for use by the second determining unit 602.

Wherein, the operational process of the UE is as shown in Fig. 4, which shall not be described herein any further.

It can be seen from the above embodiment that the UE may determine a corresponding measurement subset by using the mapping relationship configured by the base station, and transmit the CSI of the measurement subset to the base station. In this way, the indicated measurement subset may be determined with relatively low signaling overhead, and the CSI may be reported according to the indicated measurement subset, not only making the base station to obtain relatively complete CSI, but also avoiding resource collision.

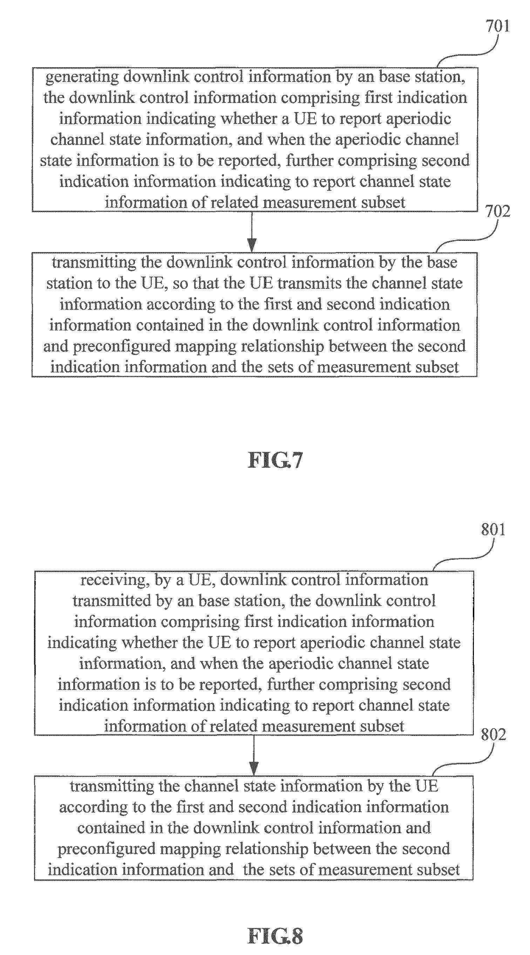

Fig. 7 is a flowchart of the method for reporting channel state information of Embodiment 5 of the present invention. As shown in Fig. 7, the method comprises:

step 701: generating downlink control information by a base station, the downlink control information comprising first indication information indicating whether UE to report aperiodic channel state information, and when the aperiodic channel state information is to be reported, further comprising second indication information indicating to report channel state information of related measurement subset;

wherein, downlink control information (DCI), such as DCI format 0, scheduling transmission of a physical uplink shared channel (PUSCH), may be generated to indicate whether aperiodic CSI is to be reported by using 2 bits of "CQI request"; and furthermore, several bits in the DCI may be used to carry the second indication information;

step 702: transmitting the downlink control information by the base station to the UE, so that the UE transmits the channel state information according to the first and second indication information contained in the downlink control information and preconfigured mapping relationship between the second indication information and the sets of measurement subsets.

It can be seen from above that the base station may use the DCI to carry the indication information indicating a measurement subset related to report of aperiodic CSI, so that the UE, when it is needed to report aperiodic CSI, transmits the aperiodic CSI according to the second indication information and the preconfigured mapping relationship between the second indication information and the sets of measurement subset, solving the problems existing in the prior art.

In this embodiment, before generating the DCI by the base station, the method may further comprise: configuring multiple groups of sets of related measurement subset by the base station; correspondingly storing the configured multiple groups of sets of related measurement subset and the second indication information, so as to establish a mapping relation between the second indication information and the sets of corresponding measurement subsets; and notifying the mapping relation to the UE;

and in generating the DCI, the base station selects corresponding second indication information.

Wherein, the configuring process of the base station is as described in Embodiment 1, which shall not be described herein any further.

Therefore, by pre-configuring the above mapping relationship by the base station, the UE is made to use the mapping relationship to determine a corresponding measurement subset after obtaining the mapping relationship, and transmits the CSI of the measurement subset, with the signaling overhead of the base station being low, and the compatibility being relatively good.

Fig. 8 is a flowchart of the method for reporting channel state information of Embodiment 6 of the present invention, the method comprising:

step 801: receiving, by UE, DCI transmitted by a base station, the DCI comprising first indication information indicating whether the UE to report aperiodic CSI, and when the aperiodic CSI is to be reported, further comprising second indication information indicating to report CSI of related measurement subset; and

step 802: transmitting the CSI by the UE according to the first and second indication information contained in the DCI and a preconfigured mapping relationship between the second indication information and the sets of measurement subset.

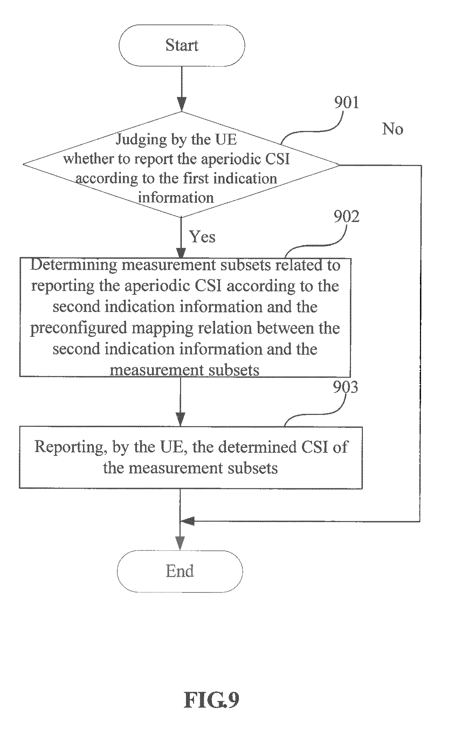

Fig. 9 is a flowchart of carrying out step 802 of Embodiment 6 of the present invention. As shown in Fig. 9, the following manner may be used:

step 901: judging by the UE whether to report the aperiodic CSI according to the first indication information; and if the result of judgment is positive, executing step 902; otherwise, terminating the process;

step 902: further determining, if the result of judgment in step 901 is positive, measurement subset related to reporting the aperiodic CSI, according to the second indication information and the preconfigured mapping relationship between the second indication information and sets of the measurement subsets;

wherein, the mapping relation is as shown in tables 3-6, and particular method of determination is as described in embodiments 1 and 2, which shall not be described herein any further;

step 903: reporting, by the UE, the determined CSI of the measurement subset.

It can be seen from the above embodiment that the UE may use the mapping relationship configured by the base station to determine a corresponding measurement subset, and transmit the CSI of the measurement subset to the base station. In this way, relatively low signaling overhead is only needed to determine the indicated measurement subset, and the CSI may be reported according to the indicated measurement subset, solving the problems existing in the prior art.

The embodiments of the present invention provide also a base station and UE, as described in embodiments 7 and 8 below. As the principle of the base station and UE for solving problems is similar to that of the above method for transmitting the channel state information based on a base station and UE of embodiments 1-4, the implementation of the method may be referred to for the implementation of the base station and UE, and the repeated parts shall not be described any further.

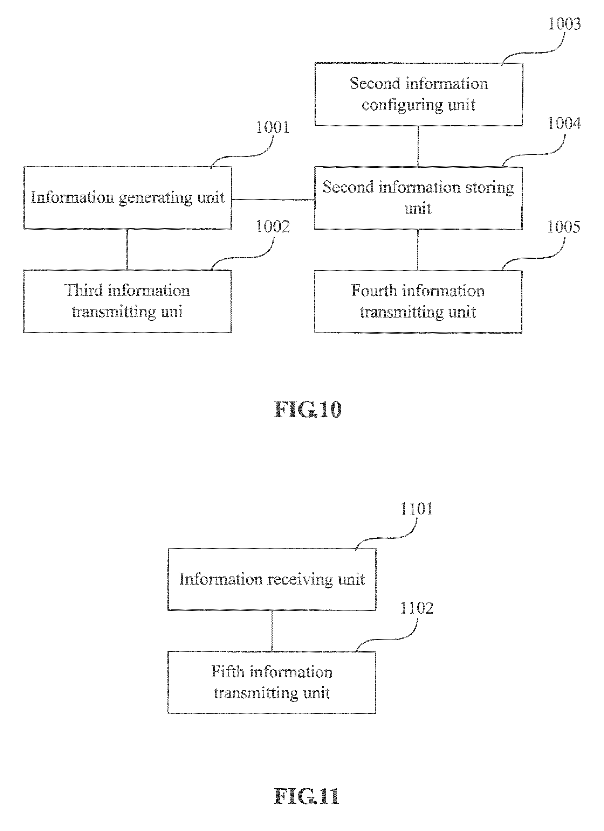

Fig. 10 is a schematic diagram of the structure of the base station of Embodiment 7 of the present invention. As shown in Fig. 10, the base station comprises: an information generating unit 1001 and a third information transmitting unit 1002; wherein,

the information generating unit 1001 is configured to generate DCI, the DCI comprising first indication information indicating whether a UE to report aperiodic CSI, and when the aperiodic CSI is to be reported, further comprising second indication information indicating to report CSI of related measurement subset; wherein the process of generating the DCI by the information generating unit 1001 is similar to that of the prior art, which shall not be described herein any further;

and the third information transmitting unit 1002 is configured to transmit the DCI to the UE, so that the UE transmits the CSI according to the first and second indication information contained in the DCI and a preconfigured mapping relationship between the second indication information and the sets of measurement subset.

As shown in Fig. 10, the base station further comprises: a second information configuring unit 1003, a second information storing unit 1004 and a fourth information transmitting unit 1005; wherein,

the second information configuring unit 1003 is configured to configure multiple groups of sets of related measurement subset; the second information storing unit 1004 is configured to correspondingly store the configured multiple groups of sets of related measurement subset and second indication information, so as to establish a mapping relationship between the second indication information and the sets of related measurement subset; and the fourth information transmitting unit 1005 is configured to notify the mapping relation to the UE;

and the information generating unit 1001 selects corresponding second indication information in generating the DCI.

It can be seen from above that the base station may use the DCI to carry the indication information indicating a measurement subset related to report of CSI, so that the UE, when it is needed to report aperiodic CSI, transmits the aperiodic CSI according to the second indication information and the preconfigured mapping relationship between the second indication information and the sets of the measurement subset, solving the problems existing in the prior art.

Fig. 11 is a schematic diagram of the structure of the UE of Embodiment 8 of the present invention. Fig. 11, the UE comprises: an information receiving unit 110 and a fifth information transmitting unit 1102; wherein,

the information receiving unit 1101 is configured to receive DCI transmitted by a base station, the DCI comprising first indication information indicating whether a UE to report aperiodic CSI, and when the aperiodic CSI is to be reported, further comprising second indication information indicating to report CSI of related measurement subset;

and the fifth information transmitting unit 1102 is configured to transmit the CSI according to the first and second indication information contained in the DCI and preconfigured mapping relationship between the second indication information and the sets of the measurement subset. Wherein, the particular process of transmission is as described in Embodiment 6, which shall not be described herein any further.

It can be seen from the above embodiment that the UE may use the mapping relationship configured by the base station to determine a corresponding measurement subset, and transmit the CSI of the measurement subset to the base station. In this way, relatively low signaling overhead is only needed to determine the indicated measurement subset, and the CSI may be reported according to the indicated measurement subset, solving the problems existing in the prior art.

An embodiment of the present invention provides a computer-readable program, wherein when the program is executed in a base station, the program enables the computer to carry out the method for reporting channel state information as described in embodiments 1 and 5 in the base station.

An embodiment of the present invention provides a storage medium in which a computer-readable program is stored, wherein the computer-readable program enables the computer to carry out the method for reporting channel state information as described in embodiments 1 and 5 in a base station.

An embodiment of the present invention provides a computer-readable program, wherein when the program is executed in UE, the program enables the computer to carry out the method for reporting channel state information as described in embodiments 2 and 6 in the UE.

An embodiment of the present invention provides a storage medium in which a computer-readable program is stored, wherein the computer-readable program enables the computer to carry out the method for reporting channel state information as described in embodiments 2 and 6 in UE.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

## Claims

1. A method for reporting channel state information, comprising:

   configuring multiple groups of sets of measurement subset by a base station;
   correspondingly storing the configured multiple groups of sets of measurement subset and corresponding indication information, so as to establish mapping relationship between the indication information and the sets of measurement subset; and
   notifying the mapping relationship to a UE, such that the UE, in needing to report channel state information, uses the obtained indication information and the mapping relationship to determine measurement subset related to reporting the channel state information, so as to report channel state information of the measurement subset to the base station.

2. The method according to claim 1, wherein the sets of measurement subset comprises one measurement subset.

3. The method according to claim 1, wherein the sets of measurement subset comprises more than one measurement subsets and a manner of report based on the more than one measurement subsets.

4. The method according to claim 2 or 3, wherein the sets of measurement subset further comprises a report frequency/report frequencies corresponding to the measurement subset/subsets.

5. A method for reporting channel state information, comprising:

   using, by a UE, obtained indication information and prestored mapping relationship between indication information and measurement subset, to determine the measurement subset corresponding to the indication information, if the UE determines that channel state information needs to be reported; and
   reporting the determined channel state information of the measurement subset by the UE to the base station.

6. A base station, comprising:

a first information configuring unit configured to configure multiple groups of sets of measurement subset;
a first information storing unit configured to correspondingly store the configured multiple groups of sets of measurement subset and corresponding indication information, so as to establish mapping relationship between the indication information and the sets of measurement subset; and
a first information transmitting unit configured to notify the mapping relationship to a UE, such that the UE, in needing to report channel state information, uses the obtained indication information and the mapping relationship to determine measurement subset related to reporting the channel state information, so as to report channel state information of the measurement subset to the base station.

7. A UE, comprising:

a first determining unit configured to determine whether channel state information needs to be reported;
a second determining unit configured to determine, according to obtained indication information and prestored mapping relationship between indication information and measurement subset,, measurement subset corresponding to the indication information if the determination result of the first determining unit is positive; and
a second information transmitting unit configured to report the determined channel state information of the measurement subset to a base station.

8. A method for reporting channel state information, comprising:

generating downlink control information by a base station, the downlink control information comprising first indication information indicating whether a UE to report aperiodic channel state information, and when the aperiodic channel state information is to be reported, further comprising second indication information indicating to report channel state information of related measurement subset;
transmitting the downlink control information by the base station to the UE, so that the UE transmits the channel state information according to the first and second indication information contained in the downlink control information and preconfigured mapping relationship between the second indication information and the sets of measurement subset.

9. The method according to claim 8, wherein the method further comprises:

configuring multiple groups of sets of related measurement subset by the base station;
correspondingly storing the configured multiple groups of sets of related measurement subset and the second indication information, so as to establish mapping relationship between the second indication information and the sets of related measurement subset;
notifying the mapping relationship to the UE; and
selecting corresponding second indication information by the base station in generating the downlink control information.

10. A method for reporting channel state information, comprising:

receiving, by a UE, downlink control information transmitted by a base station, the downlink control information comprising first indication information indicating whether the UE to report aperiodic channel state information, and when the aperiodic channel state information is to be reported, further comprising second indication information indicating to report channel state information of related measurement subset;
transmitting the channel state information by the UE according to the first and second indication information contained in the downlink control information and preconfigured mapping relationship between the second indication information and the sets of measurement subset.

11. The method according to claim 10, wherein the step of transmitting the channel state information by the UE according to the first and second indication information contained in the downlink control information and preconfigured mapping relationship between the second indication information and the sets of the measurement subset comprises:

judging by the UE whether to report the aperiodic channel state information according to the first indication information;
determining by the UE, if the result of judgment is positive, measurement subset related to reporting the aperiodic channel state information, according to the second indication information and the preconfigured mapping relationship between the second indication information and the sets of measurement subset; and

reporting, by the UE, the determined channel state information of the measurement subset.

12. A base station, comprising:

an information generating unit configured to generate downlink control information, the downlink control information comprising first indication information indicating whether a UE to report aperiodic channel state information, and when the aperiodic channel state information is to be reported, further comprising second indication information indicating to report channel state information of related measurement subset;
a third information transmitting unit configured to transmit the downlink control information to the UE, so that the UE transmits the channel state information according to the first and second indication information contained in the downlink control information and preconfigured mapping relationship between the second indication information and sets of measurement subset.

13. The base station according to claim 12, wherein the base station further comprises:

a second information configuring unit configured to configure multiple groups of sets of related measurement subset;
a second information storing unit configured to correspondingly store the configured multiple groups of sets of related measurement subset and second indication information, so as to establish mapping relationship between the second indication information and the sets of related measurement subset; and
a fourth information transmitting unit configured to notify the mapping relationship to the UE;
and the information generating unit selects corresponding second indication information in generating the downlink control information.

14. A UE, comprising:

an information receiving unit configured to receive downlink control information transmitted by a base station, the downlink control information comprising first indication information indicating whether a UE to report aperiodic channel state information, and when the aperiodic channel state information is to be reported, further comprising second indication information indicating to report channel state information of related measurement subset;
a fifth information transmitting unit configured to transmit the channel state information according to the first and second indication information contained in the downlink control information and preconfigured mapping relationship between the second indication information and the sets of measurement subset.

15. A computer-readable program, wherein when the program is executed in a base station, the program enables the computer to carry out the method for reporting channel state information as claimed in any one of claims 1-4 and 8-9 in the base station.

16. A storage medium in which a computer-readable program is stored, wherein the computer-readable program enables the computer to carry out the method for reporting channel state information as claimed in any one of claims 1-4 and 8-9 in a base station.

17. A computer-readable program, wherein when the program is executed in a UE, the program enables the computer to carry out the method for reporting channel state information as claimed in any one of claims 5, 10 and 11 in the UE.

18. A storage medium in which a computer-readable program is stored, wherein the computer-readable program enables the computer to carry out the method for reporting channel state information as claimed in any one of claims 5, 10 and 11 in a UE.

**FIG.1**

⊠  Almost blank subframe

☐  Normal subframe

**FIG.2A**

▨  Measurement subset 0

▧  Measurement subset 1

**FIG.2B**

301

```
configuring multiple groups of sets of measurement subset
                   by a base station
```

302

```
correspondingly storing the configured multiple groups of
sets of measurement subset and corresponding indication
information, so as to establish mapping relationship
between the indication information and the sets of
measurement subset
```

303

```
notifying the mapping relationship to a UE, such that the
UE, in needing to report channel state information, uses the
obtained indication information and the mapping
relationship to determine measurement subset related to
reporting the channel state information, so as to report
channel state information of the measurement subset to the
base station
```

**FIG.3**

401

```
using, by a UE, obtained indication information and
prestored mapping relationship between indication
information and measurement subset, to determine the
measurement subset corresponding to the indication
information, if the UE determines that channel state
information needs to be reported
```

402

```
reporting the determined channel state information of
the measurement subset by the UE to the base station
```

**FIG.4**

First information
configuring unit
501

First information storing
unit
502

First information
transmitting unit
503

**FIG.5**

First determining unit
601

Second determining unit
602

Second information
transmitting unit
603

Information receiving unit
604

Information storing unit
605

**FIG.6**

701

generating downlink control information by an base station, the downlink control information comprising first indication information indicating whether a UE to report aperiodic channel state information, and when the aperiodic channel state information is to be reported, further comprising second indication information indicating to report channel state information of related measurement subset

702

transmitting the downlink control information by the base station to the UE, so that the UE transmits the channel state information according to the first and second indication information contained in the downlink control information and preconfigured mapping relationship between the second indication information and the sets of measurement subset

## FIG.7

801

receiving, by a UE, downlink control information transmitted by an base station, the downlink control information comprising first indication information indicating whether the UE to report aperiodic channel state information, and when the aperiodic channel state information is to be reported, further comprising second indication information indicating to report channel state information of related measurement subset

802

transmitting the channel state information by the UE according to the first and second indication information contained in the downlink control information and preconfigured mapping relationship between the second indication information and the sets of measurement subset

## FIG.8

Start

Judging by the UE whether to report the aperiodic CSI according to the first indication information — 901 — No

Yes

Determining measurement subsets related to reporting the aperiodic CSI according to the second indication information and the preconfigured mapping relation between the second indication information and the measurement subsets — 902

Reporting, by the UE, the determined CSI of the measurement subsets — 903

End

FIG.9

1003

Second information
configuring unit

1001

1004

Information generating unit

Second information storing
unit

1002

1005

Third information
transmitting uni

Fourth information
transmitting unit

**FIG.10**

1101

Information receiving unit

1102

Fifth information
transmitting unit

**FIG.11**

# INTERNATIONAL SEARCH REPORT

| International application No. |
| --- |
| PCT/CN2011/070498 |

### A. CLASSIFICATION OF SUBJECT MATTER

See the extra sheet

According to International Patent Classification (IPC) or to both national classification and IPC

### B. FIELDS SEARCHED

Minimum documentation searched (classification system followed by classification symbols)

IPC:  H04W  H04Q  H04B

Documentation searched other than minimum documentation to the extent that such documents are included in the fields searched

Electronic data base consulted during the international search (name of data base and, where practicable, search terms used)

CPRSABS,CNTXT, VEN:  report, feedback, feed back, channel state information, CSI, set, subset, indicate, indication

### C.  DOCUMENTS CONSIDERED TO BE RELEVANT

| Category* | Citation of document, with indication, where appropriate, of the relevant passages | Relevant to claim No. |
| --- | --- | --- |
| X | CN101931989A (HUAWEI TECHNOLOGIES CO., LTD.) 29 Dec. 2010 (29.12.2010) see description paragraphs [0040]-[0051], [0056]-[0074], [0170]-[0128], [0143], figures 1-5 | 1-7,15-18 |
| Y | | 8-14 |
| Y | CN101911523A (LG ELECTRONICS INC.) 08 Dec. 2010 (08.12.2010) see description paragraphs [0062]-[0063] | 8-14 |
| A | CN101867447A (ZTE CORP.) 20 Oct.2010 (20.10.2010) see the whole document | 1-18 |
| A | WO2010147416A2 (LG ELECTRONICS INC.) 23 Dec. 2010 (23.12.2010) see the whole document | 1-18 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 12 Oct.2011 (12.10.2011) | **27 Oct. 2011 (27.10.2011)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>CHEN, Junru<br><br>Telephone No. (86-10)62411493 |
| --- | --- |

Form PCT/ISA /210 (second sheet) (July 2009)

## INTERNATIONAL SEARCH REPORT
Information on patent family members

| International application No. |
| --- |
| PCT/CN2011/070498 |

| Patent Documents referred in the Report | Publication Date | Patent Family | Publication Date |
| --- | --- | --- | --- |
| CN101931989A | 29.12.2010 | WO2010149038A1 | 29.12.2010 |
| CN101911523A | 08.12.2010 | WO2009088225A2 | 16.07.2009 |
| | | KR20090076784A | 13.07.2009 |
| | | US2009190528A1 | 30.07.2009 |
| | | WO2009088225A3 | 29.10.2009 |
| | | EP2215744 A2 | 11.08.2010 |
| | | JP2011509018T | 17.03.2011 |
| CN101867447A | 20.10.2010 | NONE | |
| WO2010147416A2 | 23.12.2010 | KR20100136418A | 28.12.2010 |
| | | WO2010147416A3 | 31.03.2011 |

Form PCT/ISA /210 (patent family annex) (July 2009

## INTERNATIONAL SEARCH REPORT

International application No.

PCT/CN2011/070498

**A.  CLASSIFICATION OF SUBJECT MATTER**

H04W 88/02 (2009.01) i
H04W 88/08 (2009.01) i
H04B7/02 (2006.01) i

Form PCT/ISA /210 (extra sheet) (July 2009)